# EUROPEAN PATENT APPLICATION

(11) **EP 4 583 207 A1**
(43) Date of publication of application: **09.07.2025**
(21) Application number: 23860326.0
(22) Date of filing: 29.08.2023
(51) Int. Cl.: H01M 4/525, B09B 5/00, C22B 7/00, C22B 23/00, C22B 26/12, C22B 47/00, H01M 4/505, H01M 10/54

(54) **ACTIVE MATERIAL, METHOD FOR PRODUCING RECYCLED ACTIVE MATERIAL, METHOD FOR TRACKING VALUABLE ELEMENT RECOVERED FROM BATTERY, AND COMPOUND FOR TRACKING**

(30) Priority: 30.08.2022 JP 2022137305
(71) Applicant: Mitsui Mining & Smelting Co., Ltd., Shinagawa-ku Tokyo 141-8584 (JP)
(72) Inventor: TAKAHASHI, Tsukasa, Ageo-shi, Saitama 362-0021 (JP); INOUE, Daisuke, Ageo-shi, Saitama 362-0021 (JP); KANG, Jongsun, Ageo-shi, Saitama 362-0021 (JP)
(74) Representative: Novagraaf Technologies
(86) International application number: PCT/JP2023/031173
(87) International publication number: WO 2024/048564

(57) **Abstract**

An active material of the present invention contains at least one element M selected from the group consisting of nickel, cobalt, manganese, and lithium and an element X different from the element M. The element X comprises at least one member selected from metals of groups 2 and 15 in the second period, metals of groups 3, 11, and 13 to 16 in the fourth period, metals of groups 1 to 3, 7 to 13, and 15 to 17 in the fifth period, metals of groups 1 to 3 and 7 to 17 in the sixth period, and metals of groups 1 to 17 in the seventh period of the periodic table.

## Description

### Technical Field

The present invention relates to an active material and a method for producing a recycled active material. The invention also relates to a method for tracing valuable elements recovered from batteries and a compound for the tracing.

### Background Art

In recent years, secondary batteries have attracted attention as an approach to reduce CO₂ emissions to prevent global warming. Materials used in the secondary batteries include those containing various valuable elements. For example, lithium-ion batteries generally contain nickel, cobalt, lithium, and so on as valuable elements, and it has been studied to recover and recycle such valuable elements in order to ensure effective utilization of resources and reduce environmental burden.

Patent literature 1 listed below proposes a method for recovering lithium from lithium-ion battery waste. Patent literature 2 describes an attempt to recover lithium from roasted lithium-ion battery waste by leaching, neutralization, and fractionation. Patent literature 3 discloses a method for reducing the levels of copper and carbon derived from the negative electrodes in a recovered material when recovering cobalt or nickel from batteries.

### Citation List Patent Literature:

Patent literature 1: JP 2019-99901A
Patent literature 2: JP 2019-160429A
Patent literature 3: JP 2020-64855A

### Summary of Invention

In recent years, the growing interest in the SDGs has led to increased international momentum for the recycling of valuable elements from battery materials. For example, the new regulation for batteries proposed by the European Commission in 2020 requires that batteries be accompanied by a document stating that the percentages of cobalt, nickel, lithium, etc. derived from recycled materials meet the respective minimum thresholds. The regulation also mandates that elements such as cobalt, nickel, and lithium, in each battery be identifiable and traceable, and that these elements be managed in a database.

However, the methods proposed to date for recovering valuable elements do not provide sufficient tracking or traceability of recovered elements, and it is not easy to comply with the recycling regulations that are expected in the future.

An object of the present invention is to improve the tracking and traceability of a valuable element recovered from batteries.

The present invention provides an active material comprising:
at least one element M selected from the group consisting of nickel, cobalt, manganese, and lithium; and
an element X different from the element M, and
the element X comprising at least one member selected from metals of groups 2 and 15 in the second period of the periodic table, metals of groups 3, 11, and 13 to 16 in the fourth period of the periodic table, metals of groups 1 to 3, 7 to 13, and 15 to 17 in the fifth period of the periodic table, metals of groups 1 to 3 and 7 to 17 in the sixth period of the periodic table, and metals of groups 1 to 17 in the seventh period of the periodic table.

The present invention also provides a method for producing a recycled active material. The method includes recovering an element M from a battery having an active material A containing the element M and producing an active material B which is the same or different from the active material A using the recovered element M. The element M is at least one element selected from the group consisting of nickel, cobalt, manganese, and lithium. The active material A further contains at least one element X selected from metals of groups 2 and 15 in the second period of the periodic table, metals of groups 3, 11, and 13 to 16 in the fourth period of the periodic table, metals of groups 1 to 3, 7 to 13, and 15 to 17 in the fifth period of the periodic table, metals of groups 1 to 3 and 7 to 17 in the sixth period of the periodic table, and metals of groups 1 to 17 in the seventh period of the periodic table.

The present invention also provides a method for tracing a valuable element recovered from a battery. The tracing method includes, when an active material B is produced using an element M that is recovered from a battery having an active material A containing the element M, using, as the active material A, an active material containing not only the element M but also at least one element X selected from metals of groups 2 and 15 in the second period of the periodic table, metals of groups 3, 11, and 13 to 16 in the fourth period of the periodic table, metals of groups 1 to 3, 7 to 13, and 15 to 17 in the fifth period of the periodic table, metals of groups 1 to 3 and 7 to 17 in the sixth period of the periodic table, and metals of groups 1 to 17 in the seventh period of the periodic table. The tracing method further includes tracing the element M recovered from a battery having the active material B on the basis of the type and/or amount of the element X contained in the active material B. The active material A and B may be the same or different from each other, and the element M is at least one member selected from the group consisting of nickel, cobalt, manganese, and lithium.

The present invention also provides a method for tracing a valuable element recovered from a battery. The tracing method includes, when an active material B is produced using an element M recovered from a battery having an active material A containing the element M, using, as the active material A, an active material containing not only the element M but also an element X that is neither contained in a natural mineral as a source of the element M nor involved in battery reaction of a battery containing the active material B and tracing the element M recovered from a battery containing the active material B on the basis of the type and/or amount of the element X contained in the active material B. The active materials A and B may be the same or different from each other, and the element M is at least one member selected from the group consisting of nickel, cobalt, manganese, and lithium.

The present invention also provides a compound for tracing a valuable element recovered from a battery, hereinafter referred to as a tracer compound. The tracer compound is adapted to be added to an active material A containing an element M when an active material B is produced using the element M recovered from the active material A. The element M is at least one member selected from the group consisting of nickel, cobalt, manganese, and lithium. The active materials A and B may be the same or different. The tracer compound is used to trace the element M recovered from a battery containing the active material B. The tracer compound contains at least one element X selected from metals of groups 2 and 15 in the second period of the periodic table, metals of groups 3, 11, and 13 to 16 in the fourth period of the periodic table, metals of groups 1 to 3, 7 to 13, and 15 to 17 in the fifth period of the periodic table, metals of groups 1 to 3 and 7 to 17 in the sixth period of the periodic table, and metals of groups 1 to 17 in the seventh period of the periodic table.

The present invention also provides a tracer compound for tracing a valuable element recovered from a battery. The tracer compound is adapted to be added to an active material A containing an element M when an active material B is produced using the element M recovered from the active material A. The element M is at least one member selected from the group consisting of nickel, cobalt, manganese, and lithium. The active materials A and B may be the same or different. The tracer compound is used to trace the element M recovered from a battery containing the active material B. The tracer compound contains an element X that is neither contained in a natural mineral as a source of the element M nor involved in battery reaction of a battery containing the active material B.

### Description of Embodiments

The present invention will be described on the basis of its preferred embodiments. The present invention relates to an active material of batteries. This active material contains a valuable element in a trackable or highly traceable form. As used herein, tracking refers to real-time identification of the current location and, optionally, the historical path of an active material containing a valuable element, namely the status of the active material. Traceability refers to identifying the journey of an active material containing a valuable element from its production through distribution to its final destination.

Tracking or tracing an item has conventionally been performed through an online tracking or tracing system based on the identification code attached to the item or its packaging. Since a battery active material is itself a stand-alone commercial transaction and can be distributed independently, it is possible to track and trace it by itself. Once incorporated in a battery, however, the active material is very difficult to track or trace. Nevertheless, seeing that the battery manufacturers will be required to identify and trace the valuable elements in each battery and to manage these elements in a database in the future, it will also be necessary for an active material that contains a valuable element and constitutes a battery to be such that allows the valuable element to be tracked and to be highly traceable. The active material of the present invention can meet such requirements.

The valuable element contained in an active material as referred to in the present invention refers to at least one element M selected from the group consisting of nickel, cobalt, manganese, and lithium. These metals, which are a part of a group of elements called rare metals, are widely used as a material constituting batteries. According to Japan's Ministry of Economy, Trade and Industry, a "rare metal" is defined as "a metal that is scarce on Earth or difficult to extract for technical or economic reasons" and "for which a stable supply is strategically important owing to existing and anticipated industrial demand".

In the present invention, the type of the active material containing the element M, which is a valuable element, is not particularly limited and may be either a positive electrode active material or a negative electrode active material. The positive electrode active material includes lithium-transition metal complex oxides having a layered rock-salt structure or a spinel structure, such as LiCoO₂, LiNiOz, LiMₙO₄, and Li(CO_{1/3}Ni_{1/3}Mn_{1/3})O₂. LiFePO₄ and the like are also included. Examples of the negative electrode active material include, but are not limited to, metallic lithium, lithium alloys, and lithium titanate.

The type of the battery having an active material containing the element M is not particularly limited and includes both primary and secondary batteries. Taking it into consideration that the element M is at least one of nickel, cobalt, manganese, and lithium, i.e., one or more of nickel, cobalt, manganese, and lithium, typical batteries in which the active material of the present invention is suitably used are lithium primary or secondary batteries. The electrolyte that is used in these batteries may be either liquid or solid. When in using a solid electrolyte, i.e., in the case of solid-state batteries, the term "solid-state" includes not only all-solid-state in which neither liquid nor gel is used as the electrolyte but also semi-solid-state in which the electrolyte contains not more than 50, 30, or 10 mass% of liquid or gel materials as the electrolyte.

The active material of the present invention contains, in addition to the valuable element M, an element X different from the element M. The element X is incorporated in the active material for the purpose of tracking the element M or enhancing the traceability of the element M. In other words, the element X is used to label the element M. In detail, if an element X is incorporated in an active material A containing the element M, when an active material B, which may be of the same or different type as the active material A, is produced using, as a raw material, the element M recovered from batteries having the active material A (i.e., when a recycled active material B is produced using the element M derived from the active material A), the element X derived from the active material A will be mixed in the active material B along with the element M derived from the active material A. As a result, it is possible to know that the active material B is recycled from the active material A. That is, it is possible to trace the element M contained in the active material A.

Specifically, if an element X is detected in the elemental analysis of the active material B, this indicates that the active material B was recycled using the element M derived from the active material A.

It is also possible to identify the origin of the element M contained in the active material B in accordance with the type of the element X. For example, when the element X is X₁, the element M in the active material B is identified as being derived from an active material A₁ produced by a manufacturer A; and when the element X is X₂, the element M in the active material B is identified as being derived from an active material A₂ produced by a manufacturer B. In this way, by incorporating an element X into an active material, it is possible to identify the production site or facility of the active material.

In addition to or instead of this, the time period of production of an active material can be identified by changing the type of the element X depending on the time period. For example, when the element X is X₁, it can be identified that the element M of the active material B is derived from the active material A₁ produced in a certain time period, and when the element X is X₂, it can be identified as being derived from the active material A₂ produced in another time period.

In addition to or instead of this, the number of times an active material containing the element M has been recycled can be identified by the amount of the element X contained in the active material B. For example, it can be determined that the higher the content of the element X in the active material B, the greater the number of times of recycling the active material containing the element M. The number of the time of recycling is an indicator of the degree of deterioration of the recycled active material.

Thus, since the active material of the present invention contains the valuable element M that is labeled with the element X, the entire history of the active material can easily be traced back, including the production site, the distribution pathway, the number of times of recycling, and the like.

The method for recovering a valuable element M from a battery having an active material containing the element M is not particularly restricted. Examples of the method of recovery include (1) the method disclosed, e.g., in JP 2015-195129A, in which a battery is roasted, crushed, and sieved, and the undersize is placed in a solvent to leach out lithium, nickel, cobalt, manganese, and so on, (2) the method described, e.g., in JP 2013-211234A, in which the active material recovered from batteries are cut and heated to volatilize the binder, the residue is crushed by impact to separate the active material from the current collector, and the separated active material is collector by a vibrating screen, (3) the method described, e.g., in JP 2013-80595A, including heat treating a battery to remove the organic matter, removing the outer cover by cutting the battery, crushing the active material, and separating the active material from the current collector by a vibrating screen, and (4) the method disclosed, e.g., in JP 2012-229481A, including pre-roasting a used battery to remove organic matter, crushing the roasted battery, separating the crushed battery by sieving into lumps consisting mainly of the current collector and particles consisting mainly of the active material by sieving, oxidatively roasting and then reductively roasting the particles to make a slurry with cobalt and nickel as metals and iron and manganese as oxides, and magnetically separating the slurry to recover Co and Ni as magnetic substances.

The element M recovered by the above methods contains a trace amount of the element X in a form accompanying the element M present in the original active material A. The recovered element M, either in its elemental form or in a compound, is used to obtain a precursor for a recycled active material, namely the active material B. When the element M is, for example, cobalt or manganese, the precursor compound containing such an element is exemplified by cobalt sulfate and manganese sulfate. Alternatively, a simple substance of the element X or a compound containing the element X may be added to the recovered element M, whether in its elemental form or a compound, to obtain a precursor of a recycled active material, i.e., the active material B.

The resulting precursor is processed by a known method to form a recycled active material, i.e., the active material B. That is, the present invention also provides a method for producing the recycled active material B. The active material B contains not only the element M but also the element X that has been present in the original active material A in a form accompanying the element M.

The form of existence of the element X in the active material A or B is not particularly limited. The element X may be present as an element constituting the active material A or B, or it may be present independently of the active material A or B. When the element X is present as an element making up the active material A or B, it may be in a solid solution.

By repeating the above-mentioned processed, the element M, which is the valuable element contained in an active material, can be labeled with the element X each time the active material is recycled. Otherwise, when recycling the element M, the technique of labeling the element M with the element X and the technique of recycling without using the element X may be used differently. Otherwise, it is possible to use an element X₁ as the element X in the first time of recycling the element M and an element X₂ which is different from the element X₁ as the element X in the second time of recycling.

In order to track the active material of the present invention or increase the traceability of the active material of the invention, it is advantageous that the element X incorporated into the active material is significantly distinguishable from the element M. From this point of view, the element X is desirably absent in natural ores as a source of the element M. By adding the element X that is inherently absent in a natural ore from which the element M is extracted to the active material containing the element M, the element X is significantly distinguished from the element M.

Examples of natural ores as a source of cobalt (the element M), i.e., cobalt ores include linnaeite (Co₃S₄), cobaltite (CoAsS), glaucodot ((Co,Fe)AsS), and skutterudite ((Co,Ni)As₃₋ₓ). Examples of natural nickel (the element M) ores include pentlandite ((Fe,Ni)₉S₈), nickeline (NiAs), Ni-bearing pyrrhotite (Fe,Ni)₁₋ₓS), and garnierite(such as Ni₆Si₄O₁₀(OH)₈). Examples of natural manganese ores include hausmannite (Mn₃O₄), pyrolusite (MnO₂), cryptomelane (K(Mn²⁺,Mn⁴⁺)₈O₁₆), rhodochrosite (MnCO₃), tephroite (Mn₂SiO₄), rhodonite (MnSiO₃), and braunite (Mn²⁺Mn³⁺Si₈O₁₂). Examples of natural lithium ores include lepidolite (K(Al,Li)₂(Si,Al)₄O₁₀(OH,F)₂), petalite (LiAlSi₄O₁₀), and spodumene The element X, which is used to label the element M, is preferably the one that is not present in the above-recited ores.

It is also advantageous that the element X is not involved in battery reaction of a battery having an active material containing the element X, thereby allowing the element X to be used only for labeling the valuable element M. In the specification of the present invention, "element X is not involved in battery reaction" means that there is no difference in various battery performances between a battery with an active material containing the element X and a battery with an active material without the element X.

From the above considerations, the element X is preferably at least one element selected from the metals listed below. These elements can be used either individually or in combination of two or more thereof.
- Metals of groups 2 and 15 in the second period 2 of the periodic table;
- Metals of groups 3, 11, and 13 to 16 in the fourth period 4 of the periodic table;
- Metals of groups 1 to 3, 7 to 13, and 15 to 17 in the fifth period 5 of the periodic table;
- Metals of groups 1 to 3 and 7 to 17 in the sixth period 6 of the periodic table;
- Metals of groups 1 to 17 in the seventh period 7 of the periodic table.

Among the metals recited, at least one of scandium, yttrium, lanthanum, gadolinium, and lutetium is particularly preferred in terms of distinguishability from the element M and non-involvement in battery reaction.

With the view of making the valuable element M trackable and enhancing the traceability of the element M while retaining various performance properties of the battery with the active material of the present invention, the content of the element X in the active material of the invention is preferably 1 to 1000 ppm in the active material. In order to further ensure the advantages, the content of the element X in the active material is more preferably 40 ppm or more, even more preferably 50 ppm or more. The content of the element X in the active material may be 60 ppm or less or 80 ppm or less. The content of the element X in the active material can be determined by, for example, ICP-emission spectrometry.

A compound containing the element X, which is used to label the valuable element M, is useful as a tracer compound for tracing the element M recovered from batteries having the active material containing the element M. This tracer compound is used to trace the valuable element M recovered from batteries. More specifically, when the element M is recovered from a battery having an active material A containing the element M, and the recovered element M is used to produce an active material B which may be the same or different from the active material A, the tracer compound is added to the active material A and can be used to track and trace the element M recovered from the active material B.

It is advantageous that the tracer compound, when added to the active material containing the element M, does not affect the performance inherently exhibited by the active material. Examples of such a compound include those containing at least one of scandium, yttrium, lanthanum, gadolinium, and lutetium.

The amount of the tracer compound to be added to the active material is such as to result in the above-recited range of the content of the element X in the active material.

As detailed above, the active material of the present invention makes it possible to easily track and trace the valuable element M from the past to the future. Therefore, the active material of the invention can easily respond to the revision of regulations on battery recycling that may occur in the near future.

While the present invention has been described with reference to its preferred embodiments, the scope of the invention is not limited to the embodiments. For example, while in the foregoing embodiments the element to be tracked or traced is the element M, i.e., at least one of nickel, cobalt, manganese, and lithium, the tracking or tracing target may be a rare metal other than the element M in addition to or instead of the element M.

### Industrial Applicability

The present invention improves the trackability and traceability of a valuable element recovered from batteries. The invention makes it easy to know the number of times a valuable element has been recycled, the location of active material production, the time of active material production, and others.

## Claims

1. An active material comprising:
at least one element M selected from the group consisting of nickel, cobalt, manganese, and lithium; and
an element X different from the element M, and
the element X comprising at least one member selected from metals of groups 2 and 15 in the second period of the periodic table, metals of groups 3, 11, and 13 to 16 in the fourth period of the periodic table, metals of groups 1 to 3, 7 to 13, and 15 to 17 in the fifth period of the periodic table, metals of groups 1 to 3 and 7 to 17 in the sixth period of the periodic table, and metals of groups 1 to 17 in the seventh period of the periodic table.

2. The active material according to claim 1, wherein the element X is absent in a natural ore as a source of the element M and not involved in battery reaction of a battery having the active material.

3. The active material according to claim 1 or 2, wherein the element X is present in an amount of 1 to 1000 ppm.

4. A method for producing a recycled active material comprising:
recovering an element M from a battery having an active material A containing the element M, the element M being at least one member selected from the group consisting of nickel, cobalt, manganese, and lithium, and
producing an active material B which is the same or different from the active material A using the recovered element M,
the active material A further containing at least one element X selected from metals of groups 2 and 15 in the second period of the periodic table, metals of groups 3, 11, and 13 to 16 in the fourth period of the periodic table, metals of groups 1 to 3, 7 to 13, and 15 to 17 in the fifth period of the periodic table, metals of groups 1 to 3 and 7 to 17 in the sixth period of the periodic table, and metals of groups 1 to 17 in the seventh period of the periodic table.

5. The method for producing a recycled active material according to claim 4, wherein the element X is absent in a natural ore as a source of the element M and is not involved in battery reaction of a battery containing the active material B.

6. A method for tracing a valuable element recovered from a battery, comprising,
when an active material B is produced using an element M recovered from a battery having an active material A containing the element M, the active materials A and B being the same or different from each other, and the element M being at least one member selected from the group consisting of nickel, cobalt, manganese, and lithium,
using, as the active material A, an active material further containing at least one element X selected from metals of groups 2 and 15 in the second period of the periodic table, metals of groups 3, 11, and 13 to 16 in the fourth period of the periodic table, metals of groups 1 to 3, 7 to 13, and 15 to 17 in the fifth period of the periodic table, metals of groups 1 to 3 and 7 to 17 in the sixth period of the periodic table, and metals of groups 1 to 17 in the seventh period of the periodic table, and
tracing the element M recovered from a battery having the active material B on the basis of the type and/or amount of the element X contained in the active material B.

7. A method for tracing a valuable element recovered from a battery, comprising,
when an active material B is produced using an element M recovered from a battery containing an active material A containing the element M, the active materials A and B being the same or different from each other, and the element M being at least one member selected from the group consisting of nickel, cobalt, manganese, and lithium
using, as the active material A, an active material further containing an element X that is neither contained in a natural ore as a source of the element M nor involved in battery reaction of a battery containing the active material B and
tracing the element M recovered from the battery containing the active material B on the basis of the type and/or amount of the element X contained in the active material B.

8. A tracer compound for tracing a valuable element recovered from a battery, comprising at least one element X selected from metals of groups 2 and 15 in the second period of the periodic table, metals of groups 3, 11, and 13 to 16 in the fourth period of the periodic table, metals of groups 1 to 3, 7 to 13, and 15 to 17 in the fifth period of the periodic table, metals of groups 1 to 3 and 7 to 17 in the sixth period of the periodic table, and metals of groups 1 to 17 in the seventh period of the periodic table,
the tracer compound being adapted to be added to an active material A containing at least one element M selected from the group consisting of nickel, cobalt, manganese, and lithium when an active material B is produced using the element M recovered from a battery containing the active material A, the active materials A and B being the same or different from each other, and
the tracer compound being used to trace the element M recovered from a battery containing the active material B.

9. A tracer compound for tracing a valuable element recovered from a battery, comprising an element X,
the tracer compound being adapted to be added to an active material A containing at least one element M selected from the group consisting of nickel, cobalt, manganese, and lithium when an active material B is produced using the element M recovered from a battery containing the active material A,
the active materials A and B being the same or different from each other,
the tracer compound being used to trace the element M recovered from a battery containing the active material B, and
the element X being neither contained in a natural ore as a source of the element M nor involved in battery reaction of a battery containing the active material B.
